# EUROPEAN PATENT APPLICATION

(11) **EP 4 793 207 A1**
(43) Date of publication of application: **19.08.2026**
(21) Application number: 26156195.5
(22) Date of filing: 04.02.2026
(51) Int. Cl.: B65G 15/44, B65G 19/04, B65G 45/10, B65G 47/78, B65G 19/24

(54) **CONVEYOR FOR CONVEYING WASTE AND SIMILAR MATERIALS**

(30) Priority: 17.02.2025 SI 202500017
(71) Applicant: Riko Ekos d.o.o., 1318 Loski Potok (SI)
(72) Inventor: Knavs Ale , Ale, 1318 Lo ki Potok (SI)
(74) Representative: Sveticic, Andrej

(57) **Abstract**

The invention relates to a conveyor for conveying waste. The goal of the invention is to provide a conveyor that will not cause a buildup of waste in the surrounding area and will provide workplace safety. A conveyor (100) comprises a conveyor belt (1) spanned over two deflection rollers (3, 4), a drive (5), a trough-shaped support frame (2), carrying idlers (6) to support a carrying run of the endless conveyor belt, a plurality of rails (7) arranged on the outside of the endless conveyor belt transversally to its longitudinal extension to contact a base (2a) of the support frame, and a discharge chute formed as a cut-out in the base of the trough-shaped frame for discharging the waste material to a collection vessel, or a cover (2d) attached to the base of the trough-shaped support frame on the infeed end of the conveyor and curved such that the material that fell off from the return run of the endless conveyor belt is returned to its carrying run.

## Description

### Field of invention

The invention relates to a conveyor for conveying waste such as mixed municipal waste, separately collected waste, industrial waste, and similar materials such as alternative fuels (such as ground rubber), wood, etc.

### Prior Art

Conveyors for conveying waste are known from prior art. At one end of the conveyor, the waste is loaded onto the conveyor belt, which conveys it to its destination at the other end of the conveyor. Under the influence of gravity, the waste falls off the conveyor belt when the conveyor belt is redirected to the underside at the deflection roller. Some of the waste sticks to the conveyor belt and does not fall off at the destination, but instead travels along the underside of the conveyor belt back toward the starting point. Some of the waste stuck to the conveyor belt falls off due to vibrations during this return run, thereby preventing buildup of waste on the floor or any other equipment located beneath the conveyor.

There are also conveyors designed to address the issue of waste buildup on the floor, featuring a scraper integrated into the conveyor belt at the destination that removes any stuck waste from the conveyor belt. The scraper cannot be used unless the conveyor belt surface is smooth. Both the carrying and return runs of the conveyor belt are supported by carrying idlers that are equidistantly arranged along the conveyor belt. The purpose of the carrying idlers is to prevent the conveyor belt's carrying and return runs from sagging, thereby preventing excessive loads on the bearings of the deflection rollers and the drive. The carrying idlers prevent the conveyor belt from fluttering, thereby reducing vibrations. In other words, conveyors longer than 10 m can thus be constructed. However, a drawback of this solution becomes particularly apparent when conveying waste to higher places, as the smooth surface of the conveyor belt causes the waste to slide back toward the starting point, thereby reducing conveying efficiency.

Furthermore, conveyors are known in the prior art that have a cover integrated into the underside of the conveyor belt to catch any falling waste, thereby preventing the buildup of waste on the floor. A drawback of this solution is in that the waste that accumulates on the cover need to be regularly removed. To remove the waste, the conveyor needs to be stopped, which reduces conveyor productivity. In addition, there are issues regarding accessibility and workplace safety, as conveyors are often installed at height.

### Technical problem

The technical problem is to provide a conveyor for conveying waste that will not cause the waste to build up in the surrounding area, will not place excessive loads on the bearings of the deflection rollers and drive, or cause vibrations even in conveyors longer than 10 m, will be highly efficient even when transporting at height, and will ensure safe operation.

### Solution to the technical problem

The relative terms such as lower, upper, etc. are defined according to the orientation of the conveyor in the operating position.

The technical problem is solved by a conveyor for conveying waste and similar materials, comprising:
- an endless conveyor belt,
- a trough-shaped support frame having a base enclosing the endless conveyor belt from below, and lateral sides arranged along two longitudinal sides of the endless conveyor belt,
- two deflection rollers over which the endless conveyor belt is spanned and which are pivotally fastened in the trough-shaped support frame,
- at least one drive for driving one of the deflection rollers,
- a plurality of carrying idlers to support a carrying run of the endless conveyor belt,
- a plurality of rails arranged on the outside of the endless conveyor belt transversally to its longitudinal extension, the rails and the base of the trough-shaped support frame being adapted in a way that the rails positioned on the return run of the endless conveyor belt are in direct or indirect contact with the base of the trough-shaped support frame, and
   - a discharge chute formed as a cut-out in the base of the trough-shaped frame and arranged proximally to the infeed end of the conveyor to discharge the waste material to a collection vessel,
   - or a cover attached to the base of the trough-shaped support frame on the infeed end of the conveyor and curved with a radius that starts from the centreline of the deflection roller, such that the material that fell off from the return run of the endless conveyor belt is returned to its carrying run.

The rails arranged on the endless conveyor belt have multiple functions. The primary function of the rails is to carry away the material that falls off the underside of the endless conveyor belt. The buildup of waste in the surrounding area is thus prevented, there is no need to stop the conveyor and to clean the through-shaped support frame - all this contributes to better operation efficiency and work safety. A further function of the rails is to support the return run of the endless conveyor belt. This function unburdens the bearings of the deflection rollers and the drive, the endless conveyor belt is not exposed to vibrations, not even in transporters exceeding 10 m. In addition, there is no need for carrying rollers of the return run of the endless conveyor belt, which simplifies the construction of the transporter and reduces the costs of maintenance of same. A further function of the rails is to prevent the material from sliding back towards the starting point while the material is conveyed to a higher level.

The advantage of the conveyor for conveying waste of the invention is not causing the buildup of waste in the surrounding area, the bearings of the deflection rollers and the drive are less burdened, no vibrations are caused, not even on the conveyors exceeding 10 m, the conveyor is highly efficient even while conveying to a higher level, and provides work safety.

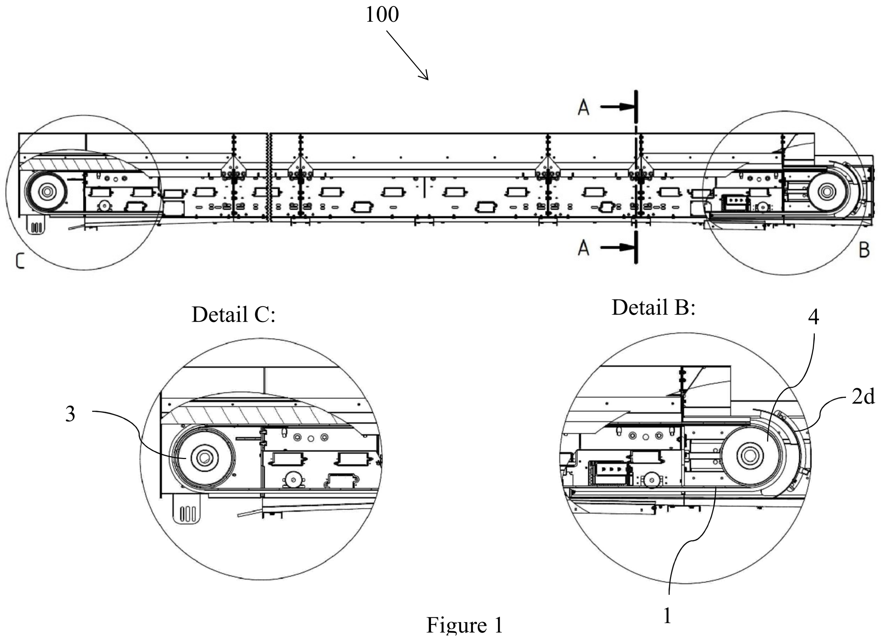

Figure 1: Conveyor, side view

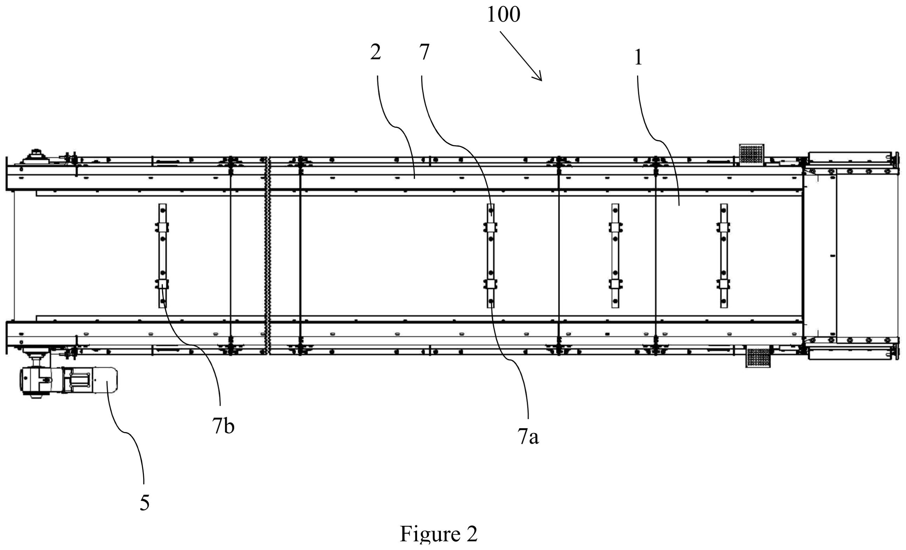

Figure 2: Conveyor, top view

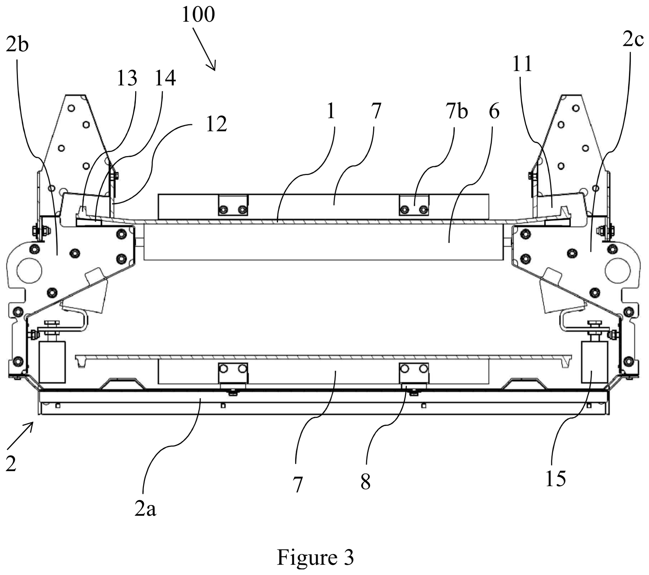

Figure 3: Conveyor, cross-section

The invention is described in more detail hereinbelow.

The technical problem is solved by a conveyor 100 for conveying waste and similar materials, comprising:
- an endless conveyor belt 1,
- a trough-shaped support frame 2 having a base 2a enclosing the endless conveyor belt from below, and lateral sides 2b, 2c arranged along two longitudinal sides of the endless conveyor belt 1,
- two deflection rollers 3, 4 over which the endless conveyor belt is spanned and which are pivotally fastened in the trough-shaped support frame,
- at least one drive 5 for driving one of the deflection rollers,
- a plurality of carrying idlers 6 to support a carrying run of the endless conveyor belt 1,
- a plurality of rails 7 arranged on the outside of the endless conveyor belt transversally to its longitudinal extension, the rails and the base 2a of the trough-shaped support frame being adapted in a way that the rails positioned on the return run of the endless conveyor belt are in direct or indirect contact with the base of the trough-shaped support frame, and
   - a discharge chute formed as a cut-out in the base of the trough-shaped frame and arranged proximally to the infeed end of the conveyor to discharge the waste material to a collection vessel,
   - or a cover 2d attached to the base of the trough-shaped support frame on the infeed end of the conveyor and curved with a radius that starts from the centreline of the deflection roller, such that the material that fell off from the return run of the endless conveyor belt is returned to its carrying run.

The rails 7 are preferably arranged substantially equidistantly on the outer circumference of the endless conveyor belt 1.

In a preferred embodiment, the endless conveyor belt 1 is made of rubber. In a preferred embodiment, the rails 7 are made of plastic, such as polyethylene (PE 500, PE 1000 and similar). In a preferred embodiment, the rails are attached to the endless conveyor belt by screws 7a. The recommended height of the rails is at least 50 mm.

The conveyor may further comprise at least one plate 8 made of wear-resistant metal material, such as manganese steel, which is arranged along the centre of the base 2a of the trough-shaped support frame, preferably two plates arranged symmetrically with respect to the central longitudinal axis of the base of the trough-shaped support frame. The plates protect the base of the trough-shaped support frame from wear and contribute to a long lifespan even if the conveyor is heavily used.

The rails 7 arranged on the endless conveyor belt may further comprise plastic linings 7b, for instance made of polyamide with or without lubricant (PA-6, PA-6 E, PA-6GS, OILAMID PA 6.6 and similar), arranged on the rails in the areas of contact with at least one plate 8. This contributes to a longer lifespan of the rails and improves sliding properties. In case of wear, only said linings are replaced without having to replace the rails, too.

The lateral sides of the support frame may further have a cavity 11 to accommodate the lateral longitudinal edge portions of the carrying run of the conveyor belt and may be provided with a primary protection element 12 closing said cavity and arranged in a way to be in a sliding contact with the upper surface of the carrying run of the endless conveyor belt. In this way, the material to be conveyed is less likely to spill into the interior of the conveyor, which reduces the possibility of conveyor stoppage or failure.

The longitudinal edges of the endless conveyor belt may be externally provided with a projection 13 which still additionally hinders the material from spilling into the interior of the conveyor. The projection 13 may be made of rubber and is bonded to the endless conveyor belt applying a hot vulcanised bonding method. The cavity 11 may further be provided with stop elements 14 arranged such as to lift the longitudinal edges of the carrying run of the endless conveyor belt above the level of the plane of the carrying run of the endless conveyor belt. This is yet another measure that reduces the possibility of the material spilling into the interior of the conveyor.

The conveyor may further comprise a plurality of centring rollers 15 arranged in the area of the longitudinal edges of the return run of the conveyor belt to maintain the endless conveyor belt in its central position.

## Claims

1. A conveyor (100) for conveying waste and similar materials, comprising:
- an endless conveyor belt (1),
- a trough-shaped support frame (2) having a base (2a) enclosing the endless conveyor belt from below, and lateral sides (2b, 2c) arranged along two longitudinal sides of the endless conveyor belt (1),
- two deflection rollers (3, 4) over which the endless conveyor belt is spanned and which are pivotally fastened in the trough-shaped support frame,
- at least one drive (5) for driving one of the deflection rollers,
- a plurality of carrying idlers (6) to support a carrying run of the endless conveyor belt (1),
- a plurality of rails (7) arranged on the outside of the endless conveyor belt transversally to its longitudinal extension, the rails and the base (2a) of the trough-shaped support frame being adapted in a way that the rails positioned on the return run of the endless conveyor belt are in direct or indirect contact with the base of the trough-shaped support frame, and
- a discharge chute formed as a cut-out in the base of the trough-shaped frame and arranged proximally to the infeed end of the conveyor to discharge the waste material to a collection vessel,
- or a cover (2d) attached to the base of the trough-shaped support frame on the infeed end of the conveyor and curved with a radius that starts from the centreline of the deflection roller, such that the material that fell off from the return run of the endless conveyor belt is returned to its carrying run.

2. Conveyor of claim 1, **characterized in that** the rails (7) are arranged substantially equidistantly on the outer circumference of the endless conveyor belt (1).

3. Conveyor according to any of the preceding claims, **characterized in that** the rails (7) are made of plastics, such as polyethylene.

4. Conveyor according to any of the preceding claims, **characterized in that** the rails are attached to the endless conveyor belt by screws (7a).

5. Conveyor according to any of the preceding claims, **characterized in that** the rails are at least 50 mm high.

6. Conveyor according to any of the preceding claims, **characterized by** further comprising at least one plate (8) made of wear-resistant metal material, such as manganese steel, which is arranged along the centre of the base (2a) of the trough-shaped support frame, preferably two plates arranged symmetrically with respect to the central longitudinal axis of the base of the trough-shaped support frame.

7. Conveyor according to any of the preceding claims, **characterized in that** the rails (7) comprise plastic linings (7b), for instance made of polyamide with or without lubricant, arranged on the rails in the areas of contact with at least one plate (8).

8. Conveyor according to any of the preceding claims, **characterized in that** the lateral sides of the support frame have a cavity (11) to accommodate the lateral longitudinal edge portions of the carrying run of the conveyor belt and are provided with a primary protection element (12) closing said cavity and arranged in a way to be in a sliding contact with the upper surface of the carrying run of the endless conveyor belt.

9. Conveyor according to any of the preceding claims, **characterized in that** the longitudinal edges of the endless conveyor belt are externally provided with a projection (13).

10. Conveyor of claim 9, **characterized in that** the projection (13) is made of rubber and is bonded to the endless conveyor belt applying a hot vulcanised bonding method.

11. Conveyor according to any of claims 8 to 10, **characterized in that** the cavity (11) is further provided with stop elements (14) arranged such as to lift the longitudinal edges of the carrying run of the endless conveyor belt above the level of the plane of the carrying run of the endless conveyor belt.

12. Conveyor according to any of the preceding claims, **characterized by** comprising a plurality of centring rollers (15) arranged in the area of the longitudinal edges of the return run of the conveyor belt to maintain the endless conveyor belt in its central position.
